# EUROPEAN PATENT APPLICATION

(11) **EP 2 690 911 A1**
(43) Date of publication of application: **29.01.2014**
(21) Application number: 12290258.8
(22) Date of filing: 27.07.2012
(51) Int. Cl.: H04W 48/12

(54) **A small cell base station, a mobile user terminal, and a method of limiting at least one mobile user terminal to a subset of functionalities**

(71) Applicant: Alcatel Lucent, 75007 Paris (FR)
(72) Inventor: Brend, Graham, Bath, Somerset BA1 7UE (GB); Puddle, Nicola, Swindon, Wiltshire SN4 0ND (GB)
(74) Representative: Sarup, David Alexander

(57) **Abstract**

A method is provided of limiting at least one mobile user terminal having a set of functionalities to a subset of the functionalities. The method comprises: a small cell base station for cellular wireless telecommunications including in a control message information indicative of at least one of permitted functionalities and not permitted functionalities, and broadcasting the control message within its cell; each of said at least one mobile user terminal in the cell receiving the broadcast control message and decoding the information element and limiting its functionalities to those permitted.

## Description

### Field of the Invention

The present invention relates to telecommunications, in particular to wireless telecommunications.

### Description of the Related Art

Wireless telecommunications systems are well-known. Many such systems are cellular in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells arc sometimes referred to as small cells, microcells, picocells, or femtocells, but we use the terms femto cells and small cells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations may be private access, public access or hybrid access. In femtocell base stations that are private access, access is restricted only to registered users, for example family members or particular groups of employces. In femtocell base stations that are public access, any user may access the femtocell base station. In hybrid access femtocell base stations, other users may also use the femtoccel base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

Femtocell base stations are sometimes referred to as femtos.

The continued widespread adoption of mobile phones across the world has meant that they are becoming increasingly pervasive throughout everyday life. Such widespread adoption has lead to issues when mobile phone usage is considered intrusive and disruptive to people near someone using a mobile phone.

This has led to the increasing deployment of systems to block mobile phone signals, known as Radio Frequency (RF) blockers, or led to users being requested to turn off their phones in places where it deemed necessary to prevent their usage. The aim of these systems is to avoid annoyance to other members of the public. Examples include in cinemas, theatres, designated train carriages.

However these known approaches have disadvantages. Blocking all mobile phone signals, or requesting users to turn off their mobiles, prevents all mobile phone call traffic. However, users are often keen to maintain some form of telecommunications service, for example if they are expecting an important phone call or wish to be available to a family member or friend in case of an urgent issue arising. Furthermore, requests to turn off mobile phones, for example, in cinemas, are reliant on the cooperation of all users within that place and hence are often not completely effective.

### Summary

The reader is referred to the appended independent claims. Some preferred features are laid out in the dependent claims.

An example of the present invention is a method of limiting at least one mobile user terminal having a set of functionalities to a subset of the functionalities. The method comprises: a small cell base station for cellular wireless telecommunications including in a control message information indicative of at least one of permitted functionalities and not permitted functionalities, and broadcasting the control message within its cell; each of said at least one mobile user terminal in the cell receiving the broadcast control message and decoding the information element and limiting its functionalities to those permitted.

In preferred embodiments, user terminals having a set of possible functionalities are limited to a subset of the functionalities. Some preferred embodiments provide a method to automatically limit mobile phone services, for example to user terminals in specific areas.

The inventors realised that the ability to limit mobile services is preferably carefully controlled and targeted so that the coverage area which is affected is limited and specific. The inventors realised that cooperation between the network on the one hand, and the user terminal on the other hand is preferred.

Preferred embodiments allow a network operator to automatically limit the functionality supported by a user terminal without undesirable wide-ranging impacts. For example, known approaches to prevent intrusive or disruptive usage of mobile phones either involve blocking all mobile phone services by preventing radio signals being received by a user's phone or involve barring all traffic with particular classes of user terminal. Both of these known approaches have undesirable impacts.

Preferred embodiments provide the network operator, or small cell user, with the ability to automatically limit the normal functionality supported by mobile user terminals within the coverage area of the cell, without blocking all signals with user terminals nor relying on users to turn off their user terminals, for example in a cinema/movie theatre. Limited functionality is maintained without one person's use of a user terminal disturbing other people in the immediate vicinity.

Preferred embodiments provide a mechanism to automatically limit mobile phone functionality in coverage areas of specific cells where normal usage would be considered intrusive.

Preferred embodiments allow small modifications to be made to the range of user terminal functionalities. Preferred embodiments provide flexibility in how user terminals within certain cells are configured.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station and user terminal within the network shown in Figure 1,
Figure 3 is a diagram illustrating operation of the femtocell base station and user terminal shown in Figure 2 under the control of the femtocell base station owner,
Figure 4 is a flow diagram illustrating operation of the user terminal in more detail, and
Figure 5 is a diagram illustrating operation of a femtocell base station and a user terminal under the control of a femtocell base station owner according to a second embodiment of the the invention.

### Detailed Description

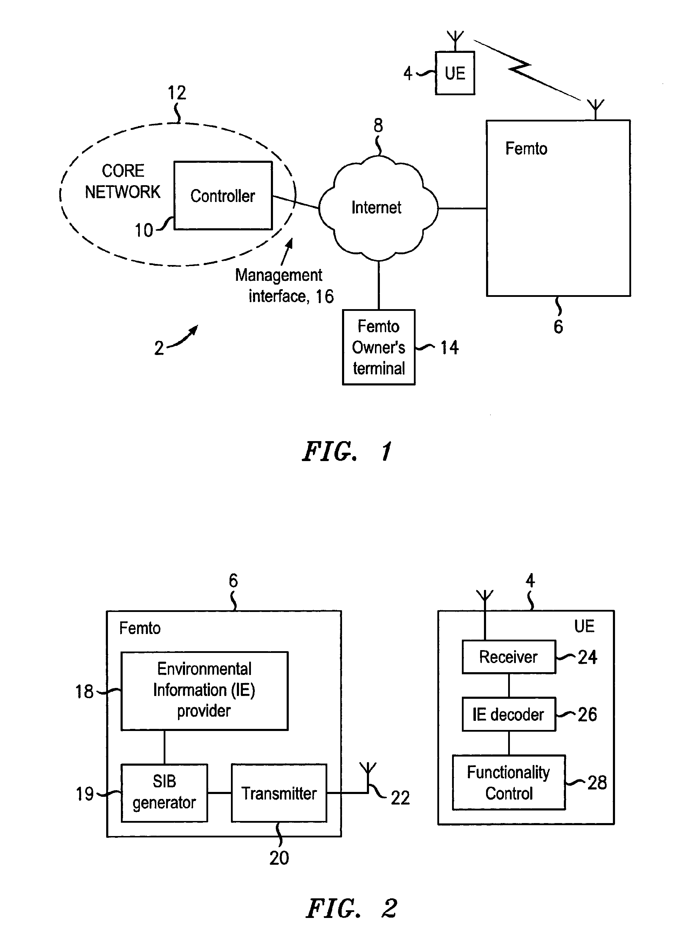

As shown in Figure 1, a network 2 for wireless communications, through which a user terminal 4 may roam, includes a femtocell base station 6 (sometimes called a "femto"). The femtocell base station 6 is connected via the Internet 8 to a controller 10 in the telecommunications core network 12. The controller is also connected via the Internet 8 to a femto owner's terminal 14. The femto owner's terminal 14, Internet 8 and controller 10 may be considered as a femto management interface 16.

As shown in Figure 2, the femtocell base station 6 includes an environmental information generator 18 connected via a System Information Broadcast (SIB) generator 19 to transmitting circuitry 20 which is connected to the antenna 22 of the femtocell base station 6. The user terminal 4 includes a receiver 24 connected to an environmental information decoder 26 which is is connected to a functionality control circuit 28.

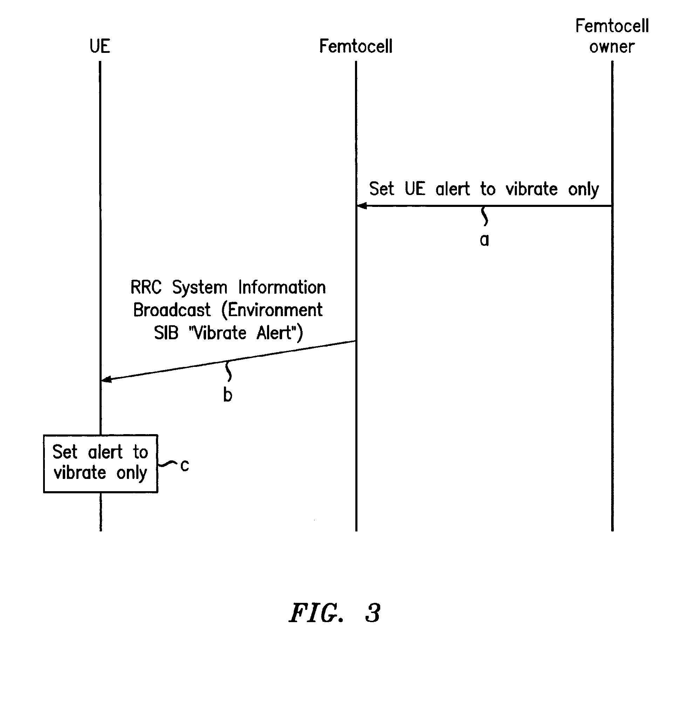

As shown in Figure 3, the femto owner controls (step a) the femtocell base station 6 via the femto management interface 16 to set the environmental information generator 18 to automatically provide for broadcast 'environmental information', namely, in this example, an indication to all user terminals within the femtocell base station's coverage area, that user terminals should automatically select a non-obtrusive alert. The environmental information is in the form of an information element (IE) included in a System Information Broadcast (SIB) periodically broadcast (step b) by the femto 6. The SIB is in accordance with Third Generation Partnership Project (3GPP) Technical Specifications 25.331 and 36.331 as of June 2012 and is a Radio Resource Control (RRC) System Information Broadcast (SIB).

In this example, the non-obtrusive alert is to indicate to the mobile phone user incoming calls/data via vibration. In other words, the indication may be considered as one to the effect that ringtones and other obtrusive alerts should not be used.

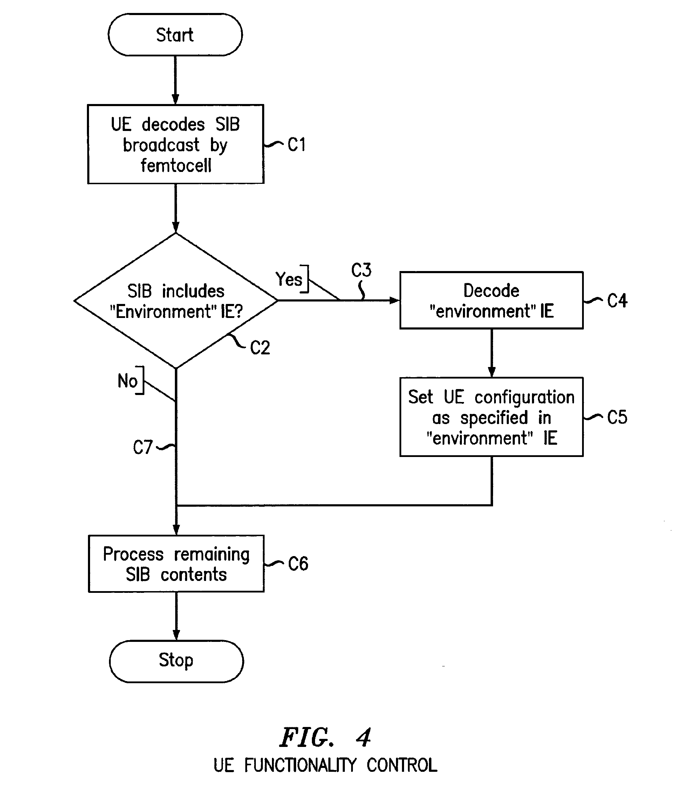

The STB is received by the receiver 24 and, amongst other things, the information element (IE) regarding 'environmental information' is decoded. This information is used by the functionality control circuit 28 to set the permitted alerts to non-obstrusive alerts only. In this way the user terminal is informed of what types of alerts the user terminal may use. This is shown in more detail in Figure 4.

As shown in Figure 4, the user terminal receives and decodes (step c1) the SIB, determines (step c2) whether the SIB includes the IE relating to environmental information and if yes (step c3) decodes that IE (step c4) and passes the decoded IE to the functionality control circuit 28 to set (step c5) the permitted alerts to non-obstrusive alerts only. The rest of the SIB is then processed (step c6). Of course if the SIB does not include this IE (step c7) then steps c4 and c5 are bypassed. In this way, the user terminal is automatically set to select the non-obtrusive alert when an incoming call or data is received.

In this example, the broadcasting of the environmental information is permanently enabled (on a per-femto basis). As an alternative, in an otherwise similar example (not shown) the broadcasting of the environmental information is additionally enabled on a time basis, for example at certain times of the day or days of the week etc since there may be situations where non-intrusive use of user terminals within the femtocell is only required at specific periods.

### Some Alternative Examples

In another similar example (not shown) the 'environmental information' is an indication to all user terminals within the femtocell base station's coverage area, that user terminals should not be given any explicit indication of an incoming call or data, leaving the user to check the status of calls (or data) received of his own volition, for example periodically.

In another example (not shown), the management interface may not involve the femto owner nor their terminal, but instead the controller is controlled by the mobile network operator who runs the network, which includes one or more macrocells in addition to one or more femtocells.

In some other similar embodiments, rather than indication of an incoming call or data by vibration only, the indication may be by visual notification on the user terminal, or by vibration and visual notification on the user terminal,

### RRC Connection

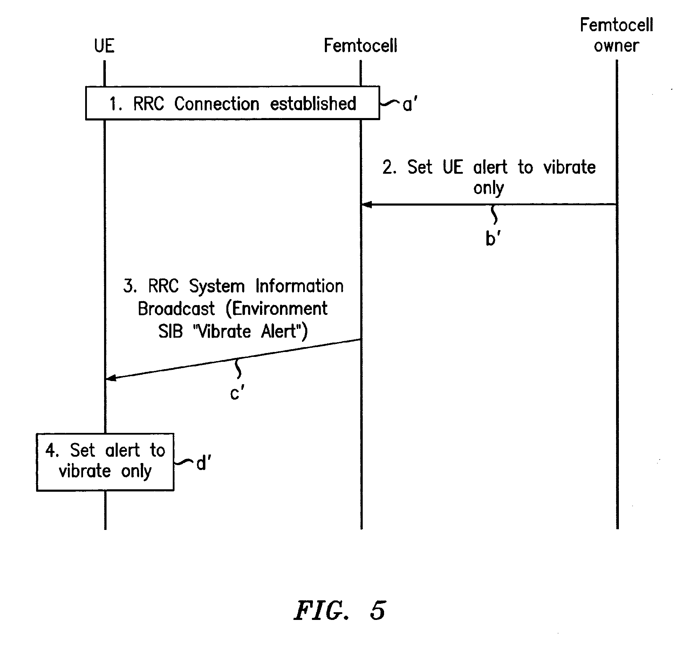

In some further examples, the user terminal establishes a Radio Resource Control (RRC) connection with the femtocell base station before the femto owner sets the UE's alert status. An example is shown in Figure 5.

As shown in Figure 5, the RRC connection is made (step a') between a femtocell base station and user terminal, then the femto owner controls (step b') the femtocell base station 6 via a femto management interface to set the environmental information generator to automatically provide for broadcast 'environmental information', namely, in this example, an indication to all user terminals within the femtocell base station's coverage area, that user terminals should automatically select a non-obtrusive alert. The environmental information is in the form of an information element (IE) included in a System Information Broadcast (SIB) periodically broadcast (step c') by the femto.In this example, the non-obtrusive alert is to indicate to the user incoming calls/data via vibration. In other words, the indication may be considered as one to the effect that ringtones should not be used. The SIB is received by the receiver and, amongst other things, the information element (IE) regarding 'environmental information' is decoded. This information is used by a functionality control circuit in the user terminal to set (step d') the permitted alerts to non-obstrusive alerts only. In this way the user terminal is informed of what types of alerts the user terminal may use.

### Services

In a further example (not shown), the information element (IE) indicates, in addition or instead of the alert mode, which mobile services the user terminal may use. For example, the indication may be an instruction for the user terminal to prevent the use of all voice services except for emergency calls. This may be because talking on the phone is often disruptive to others. However other less intrusive services would still be permitted such as packet data services, for example web browsing.

### Hybrid Femto

A hybrid access femtocell base station is one having a closed subscriber group of registered users who get priority access, but that additionally supports unregistered users when capacity allows. In further examples, where the femtocell base station is a hybrid access femtocell base station, the indication to modify user terminal functionality can be limited to, for example, user terminals within the femtocell that are not members of the closed subscriber group. In this example, user terminals in the closed subscriber group would be exempt from the requested control. For example, the closed subscriber group may be user terminals of staff working within the femtocell, who can receive voice calls and ringtone alerts, whereas others, such as members of the public in a museum or library cannot receive voice calls nor ringtone alerts. An additional broadcasted information element is provided in the SIB indicating whether the requested change in user terminal functionality applies to all user terminals within the femtocell or just a subset , e.g non-members of the closed subscriber group.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of limiting at least one mobile user terminal having a set of functionalities to a subset of the functionalities, the method comprising:
a small cell base station for cellular wireless telecommunications including in a control message information indicative of at least one of permitted functionalities and not permitted functionalities, and broadcasting the control message within its cell;
each of said at least one mobile user terminal in the cell receiving the broadcast control message and decoding the information element and limiting its functionalities to those permitted.

2. A method according to claim 1, in which the information comprises an information element included in the control message, which is a System Information Broadcast.

3. A method according to claim 2, in which the System Information Broadcast, SIB, is a Radio Resource Control, RRC, System Information Broadcast, SIB.

4. A method according to any preceding claim, in which the set of functionalities comprises alert modes.

5. A method according to claim 4, in which indicated permitted alert mode functionalities are at least one of vibration and visual indication.

6. A method according to claim 4, in which an indicated not permitted alert mode is use of ringtones.

7. A method according to any preceding claim, in which the set of functionalities comprises a voice call mode and a packet data session mode.

8. A method according to claim 7, in which an indicated permitted mode is packet data session mode.

9. A method according to claim 7, in which an indicated not permitted mode is voice call mode, voice calls with an emergency service remaining permitted.

10. A method according to any preceding claim, in which the small cell base station has an associated group of registered user terminals, each of said at least one user terminal limiting its functionalities to those permitted dependent on whether or not the user terminal is in the group of registered user terminals.

11. A small cell base station for cellular wireless telecommunications comprising an information provider, a control message generator and a transmitter,
the information provider providing information to the generator indicative of functionalities permitted or not permitted by mobile user terminals in the coverage area of the small cell base station,
the generator generating a control message comprising the information,
the transmitter broadcasting the control message for reception by mobile user terminals having a set of functionalities to limit the mobile terminals to a subset of the functionalities.

12. A small cell base station according to claim 11, in which the set of functionalities comprises alert modes, at least one of which is indicated in the information that is broadcast as permitted or not permitted.

13. A small cell base station according to claim 1 1 or 12, in which the set of functionalities comprises a voice call mode and a packet data session mode, at least one of which is indicated in the information that is broadcast as permitted or not permitted.

14. A small cell base station according to any of claims 11 to 13, in which the information comprises an information element included in the control message.

15. A mobile user terminal for cellular wireless telecommunications comprising a receiver, an information decoder and a functionality controller,
the receiver configured to receive a control message,
the information decoder configured to decode information in the control message indicative of functionalities permitted or not permitted by mobile user terminals,
the functionality controller configured to limit the user terminal having a set of functionalities to a subset of the functionalities in accordance with the decoded information.
